# EUROPÄISCHE PATENTANMELDUNG

(11) **EP 3 358 457 A1**
(43) Veröffentlichungstag der Anmeldung: **08.08.2018**
(21) Anmeldenummer: 17182186.1
(22) Anmeldetag: 19.07.2017
(51) Int. Cl.: G06F 3/14, H04N 7/15, H02G 11/02

(54) **ELEKTRONISCHES PRÄSENTATIONSSYSTEM FÜR MEETINGS**

(30) Priorität: 02.02.2017 DE 102017102088
(71) Anmelder: Kindermann GmbH, 97246 Eibelstadt (DE)
(72) Erfinder: Janotta, Gerhard, 97084 Würzburg (DE); Horbaschek, Mirko, 97252 Frickenhausen (DE); Langer, Norbert, 97199 Ochsenfurt (DE); Schönfeld, Simon, 97241 Bergtheim (DE)
(74) Vertreter: Pöhner, Wilfried Anton

(57) **Zusammenfassung**

Portables elektronisches Präsentationssystem zum Übertragen von beliebigem Bildschirminhalt und/oder Audiosignalen einer elektronischen Datenverarbeitungsgerät (5, 13) an eine Wiedergabeeinheit für Bild und/oder Ton (1), umfassend eine Eingangsschnittstelle zum Verbinden des Präsentationssystems (100) mit der Datenverarbeitungsgerät (5, 13) zwecks Übertragung des Bildschirminhalts und ggf. Audiosignals als digitales und/oder analoges Signal in einer ersten Form, und eine Ausgangsschnittstelle zum Verbinden des Präsentationssystems (100) mit der Wiedergabeeinheit (1) zwecks Übertragung des Bildschirminhalts und ggf. Audiosignals als digitales und/oder analoges Signal in einer zweiten Form, eine Verarbeitungseinheit (3) zur Umwandlung der Signale von der ersten in die zweite Form, wobei alle Komponenten der Eingangsschnittstelle (7,9), Ausgangsschnittstelle (2, 10) sowie der Verarbeitungseinheit (3) in einem einzigen Gehäuse (14) untergebracht sind sowie Verwendung eines solchen Präsentationssystems.

## Beschreibung

Vorliegende Erfindung befasst sich mit einem elektronischen Präsentationssystem zum Übertragen von beliebigen Medieninhalten in Form von Bild und/oder Tondaten einer elektronischen Datenverarbeitungsgerät an eine Wiedergabeeinheit für Bild und/oder Ton, umfassend eine Eingangsschnittstelle zum Verbinden des Präsentationssystems mit dem Datenverarbeitungsgerät zwecks Übertragung der Medieninhalte als digitales und/oder analoges Signal in einer ersten Form, eine Ausgangsschnittstelle zum Verbinden des Präsentationssystems mit der Wiedergabeeinheit zwecks Übertragung der Medieninhalte als digitales und/oder analoges Signal in einer zweiten Form, und eine Verarbeitungseinheit zur Umwandlung der Signale von der ersten in die zweite Form sowie einer Verwendung eines solchen Präsentationssystems.

Das Abhalten von Meetings zur Besprechung und Koordination des Fortgangs kollaborativer Projekte innerhalb oder zwischen Unternehmen, Forschungsgruppen, Arbeitskreisen und ähnlichem wird seit langem gepflegt. Es ist dabei ebenfalls üblich, Sachverhalte, Fragestellungen, Ideen oder Ergebnisse mittels verschiedener Präsentationsmethoden vorzustellen.

Da seit einigen Jahren mobile Datenverarbeitungsgeräte in Form von Laptop-PCs weitgehende Verbreitung gefunden haben, und zumeist zur Erstellung der zu präsentierenden Inhalte verwendet werden, hat es sich durchgesetzt, diese Geräte auch für die Präsentation einzusetzen. Hierbei stellt sich das Problem, den Inhalt der Präsentation für alle Teilnehmer sichtbar wiederzugeben. Im kleinen Kreis genügen hierfür teilweise die im Gerät eingebauten Wiedergabemittel, d.h. Display und ggf. Lautsprecher. Schon ab einer Teilnehmerzahl von mehr als circa zwei Personen wird dies aber zunehmend impraktikabel, weil die eingebauten Displays zu klein und die Lautsprecher zu schwach sind, so dass weiter entfernt sitzende Teilnehmer der Präsentation nicht mehr folgen könnten. Wird ein frontaler Präsentationsstil gewählt, bei dem der Präsentierende vor den anderen Teilnehmern stehend vorträgt, ist eine Präsentation nur mittels der eingebauten Ausgabemittel von vorneherein schlecht möglich.

In diesen Fällen muss der Bildschirminhalt auf ein geeignetes Wiedergabemittel übertragen und dort dargestellt werden. Die simpelste und auch heute noch vielfach praktizierte Methode ist es, eine Wiedergabeeinheit, etwa in Form eines digitalen Projektors ('Beamer') mit Leinwand oder eines großen Bildschirms, bereitzustellen, an den der jeweils Präsentierende zunächst seine Datenverarbeitungsgerät anschließt, bevor er nach erfolgter Anpassung des Ausgabesignals seine Präsentation durchführt.

Bei Veranstaltungen, bei denen die Präsentationsreihenfolge feststeht und jede Präsentation von einiger Länge ist, ist diese simple Lösung akzeptabel, obwohl selbst dort die Abstimmung zwischen Datenverarbeitungsgerät und Wiedergabemittel bei Verbindungs- bzw. Konfigurationsproblemen zu störenden Verzögerungen führen kann. Eine Lösung dieses Problems liegt darin, immer nur ein Datenverarbeitungsgerät mit der Wiedergabeeinheit zu verbinden und alle zu präsentierenden Inhalte auf diese zu überspielen.

Diese Verfahren besitzen jedoch erhebliche praktische Nachteile. Wollen bei dem Meeting mehrere Teilnehmer ohne feste Reihenfolge einander Präsentationen, Bilder, Skizzen, Notizen und ähnliches vorführen, beispielsweise bei einer kreativen Ideenfindungs- oder Brainstorming-Session, so wären beide Verfahren zu unflexibel und ineffizient, da die Zeit zum Wechseln des Präsentierenden so lange oder länger wie ein durchschnittlicher Präsentationsbeitrag würde.

Darum gibt es für diese Fälle in speziell vorbereiteten Meeting-Räumen Tische mit eingebauten Präsentationssystemen in Form mehrerer Videosignalkabel, üblicherweise eines pro Platz, die in einem Knoten mit elektronischem Umschalter zusammenlaufen. Hier kann das aktive Eingangskabel ausgewählt werden, dessen Signal der Knoten dann an eine oder mehrere Darstellungsmittel weiterleitet. Statt einer zentralen Umschaltung gibt es auch Lösungen, bei denen jeder Platz über einen Taster oder Schalter verfügt, mit dem er das eigene Eingangskabel aktivieren kann. Statt eines elektromechanischen Tasters, kann man dies gegebenenfalls auch über eine zur Präsentation verwendete Software mit entsprechender Software-Bedienoberfläche lösen.

Ein solchermaßen gestaltetes Präsentationssystem hat jedoch zum einen den Nachteil, dass die benötigten Kabel, oder zumindest ein unmittelbar zur Datenverarbeitungsgerät führendes Endstück wertvollen Platz auf dem Tisch beanspruchen und den Tisch insgesamt unaufgeräumt wirken lassen. Während einer Präsentation mag dies noch weniger stören, aber diese Nachteile bleiben bestehen, auch wenn das Präsentationssystem einmal gar nicht benötigt wird.

Wenn ferner ein elektronischer Signalumschalter eingesetzt wird, so wird dieser aus ästhetischen Gründen, häufig nicht sichtbar platziert, beispielsweise unter dem Tisch und über ein sichtbares Tischanschlussfeld, welches häufig in einen Sägeausschnitt im Tisch eingebaut ist, mit Signalanschlussblenden verbunden. An diese Signalanschlussblenden werden die Datenverarbeitungsgeräte der Präsentatoren über geeignete, lose Video- und gegebenenfalls Audiokabel mit einer festen Länge angeschlossen. Das aktive Signal wird dann, wie angesprochen, durch im Tischanschlussfeld oder den Signalanschlussblenden integrierte, fernbedienbare Taster ausgewählt und umgeschaltet. Zusätzlich zu dem Nachteil der störenden Kabel kommt hier noch hinzu, dass ein Sägeausschnitt die Oberfläche des Tisches zerstört, was sich nur schwer rückgängig machen lässt.

Das Problem der herumliegenden losen Kabel kann mittels Kabeleinzugsystemen gelöst werden, bei denen in einer Kabelbox, eine federbelastete Kabelaufwicklungstrommel drehbar gelagert ist, auf welche dann das über Rollen umgelenkte Kabel gewickelt wird. Bei Bedarf kann das Kabel dann auf die nötige Länge herausgezogen werden. Solche Lösungen sind beispielsweise in den Druckschriften DE 20 20011 001 684 U1, EP 2 440 486 B1 und WO 2012/172536 A2 beschrieben. Diese Systeme sind dazu gedacht, direkt unter dem Tisch an ein Tischanschlussfeld angeflanscht zu werden, wobei die Kabelenden mit den Eingangsbuchsen der elektronischen Signalumschalter verbunden. Dies löst allerdings nur das Problem der losen Kabel. Eine externe Bedieneinheit zum fernbedienten Umschalten des elektronischen Signalumschalters ist weiterhin nötig, damit die Meetingteilnehmer auf Wunsch ihre Bildschirminhalte anzeigen lassen können. Es ist also eine Vielzahl von Elementen nötig, die eingebaut, verdrahtet und bedient werden müssen.

Um auf Kabel und einen Einbau von Hardware verzichten zu können, wurden auch drahtlose Präsentationssysteme entwickelt. Ein solches Präsentationssystem offenbart beispielhaft die Druckschrift DE 20 2012 013 297 U1. Hierbei verfügt jeder Meetingteilnehmer über ein Peripheriegerät, welches eine Anschlussmöglichkeit an das Datenverarbeitungsgerät des Teilnehmers, beispielweise einen USB- oder Thunderbolt-Port, hat und weiterhin mit einer Funkschnittstelle und einer Verarbeitungseinheit ausgestattet ist. Eine auf der Datenverarbeitungsgerät des Teilnehmers ausgeführte Software in Verbindung mit einem Schnittstellentreiber erfasst den Bildschirminhalt oder andere zu präsentierende Inhalte und leitet sie an das Peripheriegerät weiter wo sie von der Verarbeitungseinheit codiert und über die Funkschnittstelle gesendet werden. Die codierten Videosignale werden von einem Signalverteilerknoten empfangen, der das Signal decodiert und in einer für diese verständlichen Form drahtgebunden an eine Anzeigeeinheit weiter gibt. Zusätzlich zu Video- können auch Audioinformationen mittels dieser Systeme weitergeleitet und zentral abgespielt werden. Das Umschalten zwischen den Signalen erfolgt, bzw. das Aktivieren der Bildschirmerfassung erfolgt über eine Software-Benutzeroberfläche und/oder einen elektro-mechanischen Taster am Peripheriegerät.

Dieses Verfahren vermeidet zwar erfolgreich den Einbau oder das Bereitstellen von Kabeln oder eines elektronischen Signalumschalters, ist jedoch insgesamt trotzdem aufwendig und kostspielig, denn es wird für jeden Teilnehmer ein Peripheriegerät mit leistungsfähiger Funkschnittstelle und Verarbeitungseinheit und zudem eine zentrale Empfangseinheit benötigt. Je nach verwendeter Funkschnittstelle ergeben sich zusätzliche Probleme. Wird WLAN eingesetzt, können durch die gleichzeitige Belegung vieler Kanäle wechselseitige Störungen auftreten, die die Übertragungsrate so reduzieren, dass beispielsweise eine flüssige Videoübertragung nicht mehr möglich ist. Der gleiche Effekt tritt bei anderweitiger aktiver WLAN-Benutzung in der Nähe des Präsentationsortes auf.

Falls die Verbindung zum Signalverteilerknoten über ein Firmen-WLAN hergestellt wird, besteht die Gefahr der Übertragung von Viren, Trojanern oder anderer Mal- bzw. Spyware in beide Richtungen. Es wäre also möglich, dass vertrauliche Informationen kopiert oder gelöscht würden oder die Systemintegrität anderer an das Netz angeschlossener Datenverarbeitungsgeräte kompromittiert würde. Zudem gäbe es die Schwierigkeit, das Benutzernamen und Passwörter bereitgestellt und verwaltet werden müssten, was zusätzlichen Aufwand bedeutet.

Probleme können auch mit Firewalls auftreten, denn in der Regel sind die Datenverarbeitungsgeräte der Meetingteilnehmer alle oder zumeist für unterschiedliche (Firmen-) Netzwerkumgebungen eingerichtet und weisen somit andere und zum Gastnetzwerk inkompatible Einstellungen auf. Die Lösung mit Firewalls assoziierter Probleme kann leicht die Möglichkeiten bzw. das technische Wissen eines Normalbenutzers übersteigen.

Vor diesem Hintergrund hat sich vorliegende Erfindung die Aufgabe gestellt, ein Präsentationssystem zu entwickeln, welches gleichermaßen die Nachteile einer festen Verkabelung und der Verwendung von Peripheriegeräten vermeidet, dabei eine schnelle, robuste Videoübertragung erlaubt und möglichst kostengünstig und vielseitig einsetzbar ist.

Gelöst wird diese Aufgabe durch ein portables Präsentationssystem nach dem unabhängigen Anspruch 1, welches bevorzugt gemäß dem unabhängigen Anspruch 18 verwendet wird.

Das portable Präsentationsystem vorliegender Erfindung umfasst ein Gehäuse, welches quader-, zylinder-, halbkugelförmig oder auch von anderer Form und aus Metall, Holz, Glas, Kunststoff oder ähnlichen Werkstoffen gefertigt sein kann und in welchem die Komponenten zur Bereitstellung von Eingangs- und Ausgangsschnittstellen sowie eine elektronische Verarbeitungseinheit eingebaut sind.

"Schnittstelle" bezieht sich hier sowohl auf die physischen Komponenten, die zum Aufbau einer Datenverbindung benötigt werden, wie beispielsweise Verbindungsstecker und Kabel oder Funkantenne und Auswerte- und Datensteuerelektronik als auch die auf der physischen Schicht aufbauenden, immateriellen, aber zum korrekten Betrieb entsprechend des jeweiligen Schnittstellenstandards genauso nötige Software bzw. Konfigurationseinstellungen. Die Bezeichnungen "Eingangsschnittstelle" und "Ausgangsschnittstelle" verdeutlichen, dass mit ersterer die Datenquelle, das heißt ein Datenverarbeitungsgerät eines Meetingteilnehmers und mit letzterer eine Datensenke, sprich eine Wiedergabeeinheit für Bild, Ton oder auch Bild und Ton, verbunden wird. Dies betrifft jedoch nur den überwiegenden Datenfluss und schließt nicht aus, dass Kommunikation auch in die entgegengesetzte Richtung stattfinden kann, wenn beispielsweise die Wiedergabeeinheit ebenfalls über Eingabemittel wie Tastatur, Maus, oder ein berührungsempfindliches Display verfügt.
Eingangs- und/oder Ausgangsschnittstellen können etwa dem VGA-, HDMI-, Thunderbolt- oder USB-Standard bei drahtgebundener Übertragung oder aber dem WLAN-, Bluetooth- oder WHDI-Standard bei drahtloser Übertragung entsprechen.

Der Schnittstellenstandard beider Arten von Schnittstellen oder sogar innerhalb der Schnittstellenklassen kann gleich oder verschieden sein. So können etwa zur Weiterleitung mehrerer, verschiedener Video- und Audiodatenströme mehrere Ausgangsschnittstellen gleichen Standards vorhanden sein. Gleichermaßen umfasst das Präsentationssystem in seiner allgemeinsten Form auch mehrere Ausgangsschnittstellen unterschiedlicher Standards, womit eine Kompatibilität mit möglichst vielen unterschiedlichen, d.h. über unterschiedliche Schnittstellen verfügende Wiedergabeeinheiten zu gewährleisten. Dies entspricht der Zielsetzung vorliegender Erfindung, ein möglichst flexibel und vielseitig einsetzbares Präsentationssystem zu schaffen.

Aus dieser Aufgabenstellung heraus kann es gleichermaßen sinnvoll sein, unterschiedliche Eingangsschnittstellen vorzusehen. Da die Standardisierung von Graphikschnittstellen bei heutigen Datenverarbeitungsgeräten aber recht weit vorangeschritten ist, kommt diesem eine niedrigere Priorität zu als der Bereitstellung einer Mehrzahl von Ausgangsschnittstellen. Es ist aber in jedem Fall zu berücksichtigen, dass manche Datenverarbeitungsgeräte über keine physischen Schnittstellen verfügen, so etwa bei Tablet-PCs oder Smartphones. Um solche Geräte auch als Datenquelle bei Meetings verwenden zu können, verfügt das erfindungsgemäße Präsentationssystem bevorzugt über zumindest eine drahtlose Eingangsschnittstelle.

Die Kernidee vorliegender Erfindung ist es, ein Präsentationssystem als kompaktes, tragbares Gerät zu schaffen, welches über alle nötigen Einrichtungen verfügt, mehreren Teilnehmern eines Meetings die gemeinsame und geteilte Benutzung von Wiedergabemitteln zur Darstellung beliebiger Video oder Audioinhalte, wie beispielsweise Bildschirme, digitale Projektoren, Virtual-Reality(VR)-Brillen, Lautsprecher, Kopfhörer und ähnlichem zu ermöglichen. Das erfindungsgemäße Präsentationssystem ist dabei leicht auch nur von einer Person transportabel und dort aufstellbar. Es ist ergonomisch und intuitiv Bedienbar und ästhetisch ansprechend gestaltet.

Es wird so eingesetzt, dass es an einen Meetingort verbracht wird, an dem mindestens ein Wiedergabemittel, beispielsweise eines der vorgenannten, vorhanden ist. Das Präsentationssystem wird dann dort, bevorzugt an einer für alle Teilnehmer gut zugänglichen Stelle, wie in der Mitte eines Tisches auf oder unter dem Tisch, aufgestellt. Sodann werden die Datenverarbeitungsgeräte der Teilnehmer mit je einer Eingangsschnittstelle des Präsentationssystems verbunden, so dass eine Datenkommunikation für Video und/oder Audiodaten von den Datenverarbeitungsgeräten an das Präsentationssystem stattfinden kann. Jeder Teilnehmer mit einem verbundenen Datenverarbeitungsgerät kann nun mithilfe einer auf seinem Gerät ausgeführten Software zu übertragende Inhalte auswählen und an das Präsentationssystem senden. Dies kann beispielsweise der komplette Bildschirminhalt, aber auch nur ein Ausschnitt daraus sein. Viele moderne Datenverarbeitungsgeräte bieten über das auf ihnen laufende Betriebssystem die Möglichkeit mehrere Bildschirminhalte gleichzeitig zu erzeugen und an verschiedene Senken weiterzugeben. So ist es fast schon ein Standard, dass beispielsweise ein Laptop PC ein gewisser Inhalt auf dem eingebauten Display angezeigt wird, aber über die externe Videoschnittstelle ein anderer Inhalt abgegeben wird. Dies lässt sich im Rahmen des erfindungsgemäßen Präsentationssystems dazu nutzen, die an die anderen Teilnehmer weitergegebenen Inhalte bzw. Informationen zu steuern. Das Präsentationssystem verwaltet nun die Verteilung dieser Inhalte auf die vorhandenen Wiedergabemittel.

Hierbei kann auch, als wichtige Aufgabe, die Umwandlung der Signale von einer ersten Form, in der sie über die Eingangsschnittstelle(n) eingehen, in eine zweite Form, in der sie über eine oder mehrere oder alle der Ausgangsschnittstellen gesendet werden, nötig sein. Diese wird durch die elektronische Verarbeitungseinheit des erfindungsgemäßen Präsentationssystems übernommen und betrifft in einer unteren logischen Schicht einmal die Anpassung des Signalformates, beispielsweise von WLAN in WHDI. Wird eine analoge Eingangsschnittstelle eingesetzt, beispielsweise das Spannungssignal eines Mikrophones, kann in einem vorherigen Schritt noch eine Digitalisierung durchgeführt werden. Weiterhin umfassen die Signalumwandlungsaufgaben der Verarbeitungseinheit im allgemeinsten Fall jedoch auch eine inhaltliche Aufbereitung der weiterzuleitenden Informationen, wie beispielsweise eine (zusätzliche) Datenkomprimierung, oder, auf einer noch höheren Ebene, eine Bild- oder Audiokorrektur (Kontrast, Schärfe, Helligkeit, Höhen, Tiefen usw.) oder auch die Vereinigung bzw. Zusammenfassung mehrerer Inhalte in einem Ausgangssignal.

Im einfachsten Fall wird eine Datenquelle als 'aktiv' designiert, deren Bild- und/oder Audiosignal dann an alle angeschlossenen Wiedergabeeinheiten weitergegeben wird. Es kann jedoch auch die Möglichkeit vorgesehen sein, dass der Teilnehmer oder ein Moderator, d.h. ein mit besonderen Befugnissen ausgestatteter Teilnehmer, bei mehreren angeschlossenen Wiedergabeeinheiten die jeweils zu verwendenden auswählen kann.
Im Prinzip wäre auch im allgemeinsten Fall bei mehreren vorhandenen Wiedergabemitteln denkbar, mehrere aktive Datenquellen zuzulassen und deren Signale gleichzeitig an verschiedene oder auch dieselben Wiedergabemittel weiterzuleiten. Als Illustration, wann dies sinnvoll sein könnte mag die Wiedergabe der Bildschirminhalte zweier verschiedener Datenquellen auf einem Bildwiedergabemittel im 'Split-Screen-Modus' neben- oder übereinander sein, welches allen Meetingteilnehmern den direkten Vergleich der Inhalte erlaubt.

Ein wesentlicher Vorteil des erfindungsgemäßen portablen Präsentationssystems ist die Vereinigung aller für ein Präsentationssystem erforderlichen Komponenten in einem einzigen, kompakten Gehäuse untergebracht zu haben. Dies erlaubt das recht spontane Abhalten von Meetings auch an dafür nicht vorbereiteten Orten. Das hierfür benötigte Wiedergabemittel kann grundsätzlich auch ein dafür besonders geeignetes Datenverarbeitungsgerät eines der Teilnehmer sein, in etwa wenn es über ein großes Display verfügt, sofern die anderen Teilnehmer gegen die Weiterleitung der Ausgangssignale des Präsentationssystems an dieses Teilnehmergerät keine Sicherheitsbedenken äußern. Rein technische ist dies in jedem Fall möglich, wenn eine Ausführungsform des erfindungsgemäßen Präsentationssystems mit einer Ausgangsschnittstelle verwendet wird, für welche übliche Datenverarbeitungsgeräte, oder zumindest das spezielle Datenverarbeitungsgerät, über eine entsprechende Eingangsschnittstelle verfügt. Dies wäre beispielsweise bei der Verwendung einer WLAN-, USB- oder auch Thunderbolt-Schnittstelle als (einer) Ausgangsschnittstelle des erfindungsgemäßen Präsentationssystems der Fall.

Am Ende des Meetings ist das erfindungsgemäße Präsentationssystem durch entfernen der angeschlossenen Datenverarbeitungsgeräte und Wiedergabemittel und gegebenenfalls aufwickeln und verstauen der Kabel, was bevorzugt motorisch oder durch Federkraft betrieben geschiet, schnell abgebaut und in transportablen Zustand zurückversetzt und somit für den nächsten Einsatz an einem anderen oder auch dem gleichen Ort vorbereitet. Der Meetingort wird in jedem Fall aufgeräumt und übersichtlich zurückgelassen und kann ohne Einschränkungen ästhetischer oder praktischer Art anschließend auch für andere Zwecke verwendet werden.

Durch das erfindungsgemäße portable Präsentationssystem können Meetings unabhängig von speziell vorbereiteten Tagungsräumen abgehalten werden. Somit entfällt auch die Notwendigkeit, solche Räumlichkeiten wie eingangs beschrieben zum Abhalten von Meetings durch entsprechende Umbaumaßnahmen wie Einbau von elektronischen Umschaltern in die Tische oder Verlegen von Kabeln im Boden, unter den Tischen oder, am unästhetischsten, offenes Verlegen vorzubereiten. Dies spart zum einen enorme Kosten und Aufwand und macht potentielle Meetingteilnehmer auch viel flexibler in der Wahl ihres bevorzugten Meetingortes. Eine Anpassung an unterschiedliche räumliche Gegebenheiten wird durch Verwendung von Verlängerungskabeln und/oder Funkschnittstellen mit genügender Reichweite erreicht.

Auch wenn ein erfindungsgemäßes Präsentationsgerät über eine Mehrzahl an Eingangsschnittstellen verfügt, ist deren Zahl doch begrenzt. Um einer größeren, in gewissem Rahmen beliebigen, Anzahl an Meetingteilnehmern berücksichtigen zu können, schlägt vorliegende Erfindung daher vor, mehrere Präsentationsgeräte einzusetzen, die zu einer Baumstruktur mit mehreren Schichten zusammengeschaltet werden. Hierbei werden an die Eingangsschnittstellen der Geräte einer untersten Schicht die Datenverarbeitungsgeräte der Teilnehmer, welche die Blätter des Baumes bilden, angeschlossen. Die Ausgangsschnittstellen einer Schicht werden dann mit den Eingangsschnittstellen der nächsthören verbunden. Hierzu ist erforderlich, dass die eingesetzte Ausführungsform des erfindungsgemäßen Präsentationssystems über, mindestens eine, kompatible Ein- und Ausgangsschnittstelle verfügt. Dies wird fortgesetzt, bis die Zahl der Geräte in der Schicht so klein geworden ist, dass gerade genügend Ausgansschnittstellen zum Anschluss aller vorhandenen Wiedergabemittel bereitgestellt sind. Obwohl nach dem eben gesagten, die Tiefe aller Blätter gleich ist, ist es grundsätzlich nicht ausgeschlossen, Datenverarbeitungsgeräte an noch frei Eingangsschnittstellen höherer Ebenen anzuschließen, wodurch diese 'Blätter' eine geringere Tiefe hätten als andere.

Im einfachsten Fall eines einzigen Bild-und Ton-Wiedergabemittels, welches von N Teilnehmern gemeinsam verwendet werden soll, wären somit Ceiling((N-1)/(k-1)) Präsentationsgeräte notwendig, wobei k hier die Zahl der vorhandenen Eingangsschnittstellen bezeichnet. Es wurde hierbei vereinfachend angenommen, dass alle Eingangsschnittstellen mit zumindest einer der Ausgangsschnittstellen kompatibel sind.

Vorteilhafte Weiterbildungen vorliegender Erfindung, welche Einzeln oder in Kombination realisierbar sind, sofern sie sich nicht offensichtlich gegenseitig ausschließen, sollen im Folgenden beschrieben werden.

Vorliegende Erfindung sieht vor mehrere Eingangsschnittstellen zur Verfügung zu stellen. Diese können grundsätzlich im einfachsten Falle alle gleich sein. Um Kompatibilität mit einem möglichst hohen Prozentsatz von durch potentielle Meetingteilnehmer verwendeter Datenverarbeitungsgeräte sicherzustellen, wird vorgeschlagen ein oder mehrere abweichende Eingangsschnittstellen vorzusehen.

Eine grobe Klassifizierung möglicher Schnittstellentypen teilt diese in drahtgebundene und drahtlose Schnittstellen ein. Drahtgebundene Schnittstellen haben bei der Signalübertragung die Vorteile einer hohen Datenrate und Störungssicherheit, auch und besonders gegenüber einer gegenseitigen Beeinträchtigung durch die Signale anderer Teilnehmergeräte. Weiterhin sind sie einfacher umzusetzen und damit auch günstiger als drahtlose Schnittstellen. Letztere bieten jedoch den Vorteil, auf Kabel verzichten zu können, welche besonders in größerer Zahl dazu neigen, sich schwer entwirrbar zu verschlingen weiterhin anderen Gegenständen den Platz wegnehmen und außerdem auch ein Sicherheitsrisiko darstellen, da man über sie stolpern oder bei unbeabsichtigter Bewegung andere Gegenstände vom Tisch stoßen kann. Zudem ist der Aufbau der fertigen Präsentationsanordnung

Bei der Entscheidung für oder gegen drahtgebundene und drahtlose Schnittstellen allgemein und hinsichtlich ihrer Anzahl im speziellen ist zu berücksichtigen, dass manche Datenverarbeitungsgeräte wie Smartphones oder Tablet-PCs über keine drahtgebundenen Schnittstellen verfügen. Somit schlägt vorliegende Erfindung vor, das erfindungsgemäße Präsentationssystem mit zumindest einer drahtlosen Eingangsschnittstelle auszustatten. Diese arbeitet bevorzugt mit einer Trägerfrequenz im 2,4GHz oder 5 GHz Band. Weiterhin bevorzugt ist dies eine WLAN-Schnittstelle, da dieser Standard eine gute Reichweite mit ausreichender Übertragungsgeschwindigkeit verbindet und, wesentlich, auch bei heutigen Datenverarbeitungsgeräten sehr weit verbreitet ist.

Die übrigen Eingangsschnittstellen sind bevorzugt drahtgebundene, das solche die vorgenannten Vorteile aufweisen. Sehr weite Verbreitung hat der HDMI-Standard, welcher inzwischen VGA als Videoschnittstellenstandart weitgehend abgelöst hat und sich gegenüber diesem auch dadurch auszeichnet, dass das Audiosignal über die gleiche Schnittstelle mitübertragen wird bzw. werden kann, wodurch sich ein separater Audioanschluss erübrigt. Das Präsentationssystem gemäß vorliegender Erfindung ist daher bevorzugt mit einer, noch mehr bevorzugt mit zwei, besonders bevorzugt drei oder mehr HDMI Eingangsschnittstellen (HDMI-in) ausgerüstet.

Auch bei den Ausgangsschnittstellen ist es sinnvoll, mehr als eine im erfindungsgemäßen Präsentationsgerät vorzusehen. Bevorzugt ist je mindestens eine drahtgebundene und eine drahtlose Ausgangsschnittstelle vorhanden. Eine der drahtgebundenen Ausgangsschnittstellen ist bevorzugt ebenfalls eine HDMI-Schnittstelle (HDMI-out), wodurch die Kompatibilität der Ausgangsschnittstellen eines erfindungsgemäßen Präsentationssystems mit den Eingangsschnittstellen eines anderen gewährleistet ist. Dies erlaubt es in oben beschriebener Weise, mehrere Präsentationssystem zusammenzuschalten, um trotz der notwendig begrenzten Zahl an Eingangsschnittstellen pro Gerät einer größeren Anzahl an Meetingteilnehmern die gemeinsame Benutzung der vorhandenen Wiedergabemittel zu ermöglichen.

Als eine der drahtlosen Ausgangsschnittstellen schlägt vorliegende Erfindung zum einen eine WLAN-Schnittstelle vor. Dies bietet den Vorteil, mehrere Präsentationsysteme auch drahtlos zusammenzuschalten. Weiterhin ist WLAN die häufigste Drahtlosschnittstelle für heutige Wiedergabemittel. Besonders bevorzugt verfügt das Präsentationssystem vorliegender Erfindung aber über eine drahtlose Ausgangsschnittstelle, welche im 60GHz-Band arbeitet. Dieses Band ist frei für kommerzielle Anwendungen und bietet aus technischer Sicht eine höhere Übertragungskapazität und ist im Übrigen durch die große Frequenzseparation auch nicht durch gleichzeitig laufende Kommunikation über andere Drahtlosschnittstellen gestört. Dadurch ist die schnelle, latenzfreie Übertragung von unkomprimierten Full-HD oder 4k-UHD-Signalen möglich Als einziger Nachteil ist die etwas geringere effektive Reichweite im Vergleich zu niederfrequenteren Schnittstellen wie WLAN zu verzeichnen. Diese beträgt im Mittel etwa 10m, was für die vorgeschlagene Anwendung fast immer ausreichend sein wird.

Die drahtgebundenen Schnittstellen, insbesondere die Eingangsschnittstellen, umfassen im Sinne vorliegender Erfindung die Kabel nebst Verbindungssteckern. Eine sinnvolle nutzbare Kabellänge liegt gemäß vorliegender Erfindung zwischen 20 und 200cm. Die nutzbare Länge ist hier die Länge desjenigen Kabelteils, welcher aus dem Gehäuse des erfindungsgemäßen Präsentationssystems herausragt. Bevorzugt werden diese Kabel mittels Kabeleinzugssystemen gehandhabt, von denen bevorzugt je drahtgebundener Schnittstelle eines vorhanden ist. Die Kabeleinzugssysteme umfassen eine Kabelbox mit einer internen Kabeltrommel, welche durch eine Feder oder motorisch bewegt wird, um das durch Rollen geführte und umgelenkte Kabel auf die Trommel aufzuwickeln. Das Kabel wird dann bei Bedarf auf die nötige Länge herausgezogen, wobei es sich von der Trommel abwickelt. Bei einer motorgetriebenen wäre auch ein motorisiertes Ausfahren des Kabels möglich.

Die Kabeleinzugsbox kann einseitig oder zweiseitig sein. Eine einseitige Box wickelt das Kabel nur von einer Seite auf oder ab, sodass sich die Box immer ungefähr am Ende des Kabels befindet. Vorliegende Erfindung schlägt in diesem Fall vor, die Kabelbox im Gehäuse des Präsentationssystems zu versenken bzw. zu integrieren, da dies einen ästhetisch besseren Eindruck ergibt und, wichtiger, einem ungewollten Lösen des Kabels sowie einem Verschleiß der Stecker durch Quer- und Längs-Zugkräfte unterbindet. Die Kabelbox kann aber auch zweiseitig ausgeführt sein. Hierbei wird das Kabel auf beiden Seiten mehr oder minder gleichmäßig ab- bzw. aufgewickelt, wodurch die Box immer nahezu in der Mitte des Kabels verbleibt.

Egal welcher Typ von Kabeleinzugsbox verwendet wird, verfügt das Gehäuse des erfindungsgemäßen Präsentationssystems bevorzugt über Aussparungen, bevorzugt an der Unterseite, zur Aufnahme der Kabeleinzugsboxen. Diese Aussparungen reichen bevorzugt bis auf die Außenseite des Gehäuses, so dass Kabel und Stecker, bzw., insbesondere bei zweiseitigen wichtig, die Kabeleinzugsbox als Ganzes gut mit der Hand erreichbar ist.

Es muss den Meetingteilnehmern möglich sein, die aktive Datenquelle auszuwählen. Dies kann zum einen über eine bei der Präsentation verwendete Software gelöst werden, bei der beispielsweise eine Benutzeroberfläche über Schaltflächen zum Aktivieren und/oder hinzuschalten des eigenen Datenverarbeitungsgeräts als Datenquelle ermöglicht. Um die gewünschte maximale Flexibilität zu erreichen, die nötige Vorbereitung zu minimieren und auch Sicherheitsbedenken auszuräumen, schlägt vorliegende Erfindung jedoch vor, auf eine spezielle Software zu verzichten und nur auf die üblicherweise in das Betriebssystem der Datenverarbeitungsgeräte integrierten Möglichkeiten der Video- und Audiosignalausgabe zurückzugreifen. Dies bedingt jedoch auch, dass das erfindungsgemäße Präsentationsgerät selbst mit Eingabemitteln zum Aktiv-Schalten des einen oder anderen angeschlossenen Datenverarbeitungsgerätes ausgestattet werden muss. Eine solche Lösung bietet aber auch bei Verwendung einer Präsentationssoftware Vorteile, beispielsweise, dass ein in der Nähe des erfindungsgemäßen Präsentationssystems sitzender Teilnehmer als Moderator fungieren und das Umschalten zwischen verschiedenen Datenquellen selbst vornehmen kann.

Zusätzlich oder in Verbindung mit den Eingabe- bzw. Umschaltmitteln bietet es sich an, auch Indikatormittel vorzusehen, welche es erlauben, direkt am erfindungsgemäßen Präsentationssystem eine visuelle Anzeige zu erhalten, welche der Eingangsschnittstellen gerade aktiv, d.h. zu der/den Ausgangsschnittstellen durchgeschaltet ist. Bevorzugt ist dies durch ein in die Eingabemittel integriertes Anzeigemittel gelöst.
Besonders Bevorzugt schlägt vorliegende Erfindung vor, als Eingabemittel pro Eingangsschnittstelle je einen elektromechanischen oder kapazitiven (kontakt bzw. berührungslose) Taster vorzusehen, der über einen integrierten visuellen Indikator, etwa in Form einer oder mehrerer, verschiedenfarbiger LEDs verfügt. Drücken eines Tasters würde im einfachsten Fall die zugehörige Eingangsschnittstelle aktivieren. Es können auch weitergehende Steuerungsmöglichkeiten vorgesehen werden, indem beispielsweise das Drücken zweier oder mehrerer Taster gleichzeitig eine Split-Screen-Darstellung mit den Videodaten der jeweiligen Eingangsschnittstellen aktiviert.

Die internen Komponenten des erfindungsgemäßen Präsentationssystems umfassend die Elektronikbauelemente der Schnittstellen und die Verarbeitungseinheit, sind bevorzugt auf einem Träger untergebracht, der im Inneren des Gehäuses lösbar, insbesondere bevorzugt werkzeuglos lösbar befestigt wird. Dieser dient der mechanischen Stützung und Stabilisierung der Komponenten, sowie dazu, dass diese schnell und simpel zu Überprüfungs- und Reparaturzwecken als Ganzes aus dem Gehäuse entfernbar sind.

Weitere Eigenschaften, Merkmale und Vorteile vorliegender Erfindung ergeben sich aus den im folgenden Anhang der Figuren näher erläuterten Ausführungsbeispielen. Diese sollen die Erfindung nur illustrieren und in keiner Weise in ihrer Allgemeinheit einschränken.

Es zeigen:
- Figur 1:: Eine schematische Darstellung einer Ausführungsform des erfindungsgemäßen Präsentationssystems bei einer Verwendung.
- Figur 2:: Eine perspektivische Ansicht des Präsentationssystems aus Figur 1.

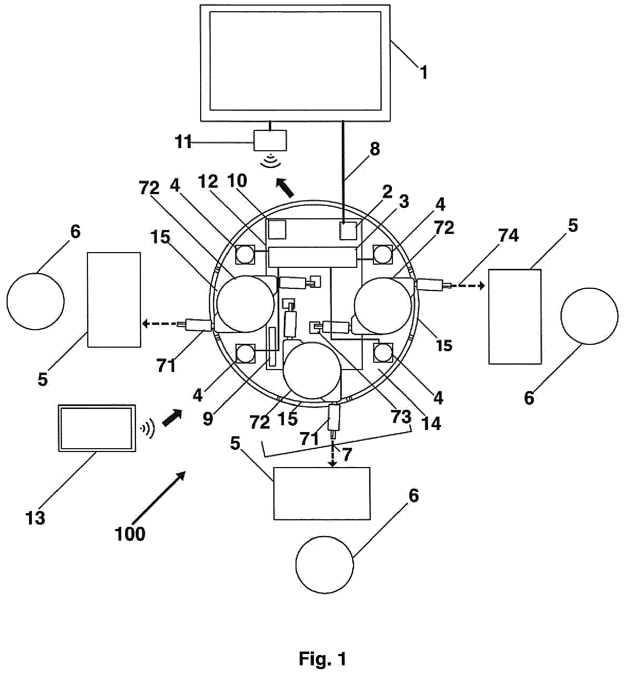

**Figur 1** zeigt eine bevorzugte Ausführungsform eines erfindungsgemäßen Präsentationssystems mit vier Eingangs- und zwei Ausgangsschnittstellen bei einer Verwendung im Rahmen eines Meetings mit drei Teilnehmern und vier Datenverarbeitungsgeräten als Datenquellen.
Präsentationssystem 100 umfasst ein Gehäuse 14 in welchem ein Träger 12 befestigt ist, der wiederum die elektronischen Komponenten bzw. Baugruppen des Präsentationssystems 100 trägt. Bei diesen handelt es sich um die Schnittstellensteuerungen 73 der drei drahtgebundenen Eingangsschnittstellen 7, die Elektronik für eine drahtlose Eingangsschnittstelle 9, die Steuerung der drahtgebundenen Ausgangsschnittstelle 2, sowie Steuerelektronik und Sender der drahtlosen Ausgangsschnittstelle 10. Die drahtgebundenen Eingangsschnittstellen 7 umfassen weiterhin je eine Kabeleinzugsbox 72 mit darin aufgewickeltem Kabel 74, an dessen Ende ein Steckverbinder 71 zum Anschluss an eine Video oder kombinierte Video/Audio-Ausgangsschnittstelle der Datenverarbeitungsgeräte 5 sitzt. Das mobile Datenverarbeitungsgerät 13, welches nicht über eine physische, drahtgebundene Schnittstelle verfügt, verbindet sich mit dem Präsentationssystem 100 über die drahtlose Eingangsschnittstelle 9. Die Umwandlung der über die Eingangsschnittstellen an das Präsentationsystem eingehenden Signale und deren Weiterleitung über die bzw. eine der Ausgangsschnittstellen an die bzw. eine angeschlossene Wiedergabeeinheit 1 für Bild- und Ton erfolgt durch die Verarbeitungseinheit 3. Jede der vier Eingangsschnittstellen 7, 9 verfügt über je ein kombiniertes Eingabe- und Indikatormittel 4, welches es den Meetingteilnehmern erlaubt, eine oder auch mehrere der Eingangsschnittstellen aktiv zu schalten. Die Aktivierung wird durch ein visuelles Signal angezeigt. Sind mehrere gleichzeitig aktiv, so werden durch Verarbeitungseinheit 3 die Videosignale zusammengefasst und räumlich nebeneinander dargestellt (Split-Screen-Modus).
Wiedergabeeinheit 1 ist in diesem Beispiel sowohl drahtgebunden, über Schnittstelle 2 und Kabel 8, als auch drahtlos, über Schnittstelle 10 und Empfänger 11 der Wiedergabeeinheit 1 angebunden.

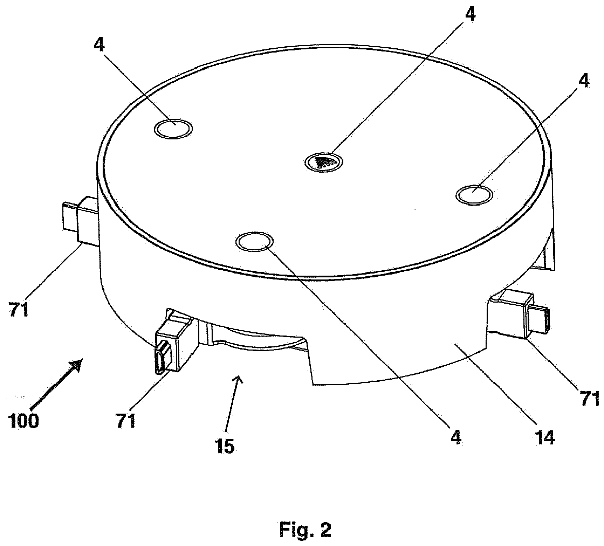

**Figur 2** zeigt eine perspektivische Ansicht des Präsentationssystems aus Figur 1. Es verfügt über ein (hohl)zylindrisches Gehäuse 14 in dessen Mantelfläche und Unterseite Aussparungen 15 vorhanden sind, durch die die Stecker 71 an den Enden der hier vollständig in ihre jeweiligen Kabeleinzugsboxen eingezogen dargestellten Kabel sowie die Boxen selbst gut mit der Hand zugänglich sind. Wie anhand der Stecker 71 zu erkennen ist, werden bei der hier dargestellten bevorzugten Ausführungsform des erfindungsgemäßen portablen Präsentationsystems drei HDMI Schnittstellen als drahtgebunden Eingangsschnittstellen verwendet. Diese haben die Vorteile einer hohen Datenrate und entsprechend hoher möglicher räumlicher und/oder zeitlicher Auflösung des Bildsignals und ermöglichen es außerdem, ein Audiosignal über die gleiche Schnittstelle mit zu übertragen. Ferner haben HDMI Schnittstellen auch eine große Verbreitung unter heutigen Datenverarbeitungsgeräten.

An der Oberseite von Gehäuse 14 sind gut sicht- und leicht erreichbar vier kombinierte Eingabe- und Indikatormittel 4 in der Form mechanischer Taster angebracht, für jede der vorhandenen Eingangsschnittstellen je einer. Die Zuordnung der Taster zu den drahtgebundenen Schnittstellen ist durch räumliche Nähe erreicht, im Falle der drahtlosen Schnittstelle ist der zugehörige Taster durch eine symbolische Markierung hervorgehoben. Die vier Indikator-Taster zeigen zum einen durch ein Leuchtsignal, welche der Eingangsschnittstellen aktiv ist, d.h. welches Eingangssignal zu der bzw. den Ausgangsschnittstellen durchgeschaltet ist. Zum anderen erlauben sie auch, durch einfachen Tastendruck eine Eingangsschnittstelle zu aktivieren oder zu deaktivieren.

### Bezugszeichenliste

- 1: Wiedergabeeinheit für Bild und Ton
- 11: Empfänger-Modul der Wiedergabeeinheit
- 2: drahtgebundene Ausgangsschnittstelle
- 3: Verarbeitungseinheit
- 4: Eingabeeinrichtung mit Indikator
- 7: Kabeleinzugssystem, drahtgebundene Schnittstelle
- 71: Verbindungsstück
- 72: Kabeleinzugsbox
- 73: elektronische Verbindungseinheit
- 74: Eingangsschnittstellenkabel
- 8: Video/Audio-Kabel zur Wiedergabeeinheit
- 9: drahtlose Eingangsschnittstelle
- 10: drahtlose Ausgangsschnittstelle
- 12: Träger
- 14: Gehäuse
- 15: Aussparung für Zugriff zum Kabeleinzugssystem
- 100: Präsentationssystem
- 5: Datenverarbeitungsgerät
- 6: Teilnehmer
- 13: drahtlos kommunizierende Datenverarbeitungsgerät

## Patentansprüche

1. Elektronisches Präsentationssystem zum Übertragen von beliebigen Medieninhalten in Form von Bild und/oder Tondaten von einem elektronischen Datenverarbeitungsgerät (5, 13) an eine Wiedergabeeinheit (1) für Bild und/oder Ton, umfassend
- eine Eingangsschnittstelle zum Verbinden des Präsentationssystems (100) mit dem Datenverarbeitungsgerät (5, 13) zwecks Übertragung der Medieninhalte als digitales und/oder analoges Signal in einer ersten Form, und
- eine Ausgangsschnittstelle zum Verbinden des Präsentationssystems (100) mit der Wiedergabeeinheit (1) zwecks Übertragung des verarbeiteten Medieninhalts als digitales und/oder analoges Signal in einer zweiten Form,
- eine Verarbeitungseinheit (3) zur Verarbeitung des Medieninhalts und Umwandlung der Signale von der ersten in die zweite Form,
**dadurch gekennzeichnet, dass**
alle Komponenten der Eingangsschnittstelle (7, 9), Ausgangsschnittstelle (2, 10) sowie der Verarbeitungseinheit (3) in einem Gehäuse (14) untergebracht sind.

2. Präsentationssystem nach Anspruch 1, **dadurch gekennzeichnet, dass** mehrere Ausgangsschnittstellen (2, 10) vorhanden sind.

3. Präsentationssystem nach Anspruch 1 oder 2, **dadurch gekennzeichnet, dass** mehrere Eingangsschnittstellen (7, 9) vorhanden sind.

4. Präsentationssystem nach einem der vorhergehenden Ansprüche, **dadurch gekennzeichnet, dass** es portabel ist.

5. Präsentationssystem nach einem der vorhergehenden Ansprüche, **dadurch gekennzeichnet, dass** drahtgebundene Eingangsschnittstellen (7) und/oder Ausgangsschnittstellen (2) vorhanden sind.

6. Präsentationssystem nach einem der vorhergehenden Ansprüche, **dadurch gekennzeichnet, dass** drahtlose Eingangsschnittstellen (9) und/oder Ausgangsschnittstellen (10) vorhanden sind

7. Präsentationssystem nach Anspruch 4, **dadurch gekennzeichnet, dass** eine der drahtgebundenen Eingangsschnittstellen (7) und/oder eine der Ausgangsschnittstellen (2) über ein aus Kabel (74) mit Verbindungsstück (71) und Kabeleinzugsbox (72) bestehendes Kabeleinzugssystem verfügt.

8. Präsentationssystem nach Anspruch 6, **dadurch gekennzeichnet, dass** das Kabel (74)
- motorisch aus der Kabeleinzugsbox (72) aus- und einfahrbar ist, und/oder
- eine nutzbare Länge von zwischen 20 und 200cm besitzt.

9. Präsentationssystem nach Anspruch 6 oder 7, **dadurch gekennzeichnet, dass** die Kabeleinzugsbox (72)
- einseitig ist, wobei das Kabel (74) nur von einer Seite auf ein Kabelaufwickelgehäuse aufgewickelt wird, welches an einer Stelle verbleibt, oder
- zweiseitig ist, wobei das Kabel (74) von beiden Seiten auf ein Kabelaufwickelgehäuse aufgewickelt wird, welches dabei im in etwa in der Mitte des herausgezogenen Kabels (74) sitzt.

10. Präsentationssystem nach einem der Ansprüche 6-8, **dadurch gekennzeichnet, dass** das Gehäuse über Aussparungen (15) zur Aufnahme und händischen Zugänglichkeit der Kabeleinzugssysteme verfügt.

11. Präsentationssystem nach einem der vorhergehenden Ansprüche, **dadurch gekennzeichnet, dass** eine Eingabeeinrichtung (4) zum Umschalten der Bild und ggf. Tonsignalquelle vorhanden ist.

12. Präsentationssystem nach einem der vorhergehenden Ansprüche, **dadurch gekennzeichnet, dass** ein Indikatormittel (4) zum visuellen Anzeigen der gerade aktiven Eingabeschnittstelle (7, 9) vorhanden ist.

13. Präsentationssystem nach Anspruch 10, **dadurch gekennzeichnet, dass** je eine Eingabeeinrichtung (4) in Form eines elektromechanischen oder kontaktlosen Tasters pro Eingangsschnittstelle (7, 9) vorhanden ist, wobei durch Drücken des zugehörigen Tasters die jeweilige Eingangsschnittstelle (7, 9) aktivierbar ist.

14. Präsentationssystem nach Anspruch 12, **dadurch gekennzeichnet, dass** jede Eingabeeinrichtung (4) über ein integriertes Indikatormittel (4) verfügt.

15. Präsentationssystem nach einem der vorhergehenden Ansprüche, **dadurch gekennzeichnet, dass** eine drahtlose Ausgangsschnittstelle (10) zur Signalübertragung eine Trägerfrequenz außerhalb der üblichen, zur digitalen Datenübertragung genutzten Frequenzbänder, bevorzugt WLAN im 60-GHz-Band, verwendet.

16. Präsentationssystem nach einem der vorhergehenden Ansprüche, **dadurch gekennzeichnet, dass** eine Eingangsschnittstelle (9) zur Signalübertragung eine Trägerfrequenz im 2,4 und/oder 5-GHz-Band einsetzt und/oder eine WLAN-Schnittstelle ist.

17. Präsentationssystem nach einem der vorhergehenden Ansprüche, **dadurch gekennzeichnet, dass** ein Träger (12) vorhanden ist, auf dem die Komponenten der Verarbeitungseinheit (3) sowie der Schnittstellen (2, 73, 9) untergebracht sind.

18. Verwendung eines Präsentationssystems nach einem der Ansprüche 1 bis 16 bei einem Meeting an einem Meetingort, an dem sich Teilnehmer (6) des Meetings versammelt haben, und an dem eine Wiedergabeeinheit für Bild und/oder Ton vorhanden ist,
**dadurch gekennzeichnet, dass**
- das Präsentationssystem (100) zum Meetingort gebracht und dort an einer, bevorzugt für alle Teilnehmer (6) zugänglichen, Stelle aufgestellt wird,
- ein Datenverarbeitungsgerät (5, 13) eines der Teilnehmer (6) mit einer Eingangsschnittstelle (7, 9) des Präsentationssystems (100) verbunden wird,
- eine Ausgangsschnittstelle (2, 10) des Präsentationssystems (100) mit der Wiedergabeeinheit (1) verbunden wird,
- die verwendete Eingangsschnittstelle (7, 9) aktiviert wird, und
- eine Weiterleitung des Bildschirminhaltes der Datenverarbeitungsgerät (5, 13) an die Wiedergabeeinheit (1) mittels des Präsentationssystems (100) erfolgt.
